# EUROPEAN PATENT SPECIFICATION

(11) **EP 1 529 827 B1**
(45) Date of publication and mention of the grant of the patent: **12.12.2007**
(21) Application number: 04256559.8
(22) Date of filing: 25.10.2004
(51) Int. Cl.: C09J 175/04, C08G 18/76, C08G 18/69

(54) **Materials for bonding elastomer**
Material zum Verbinden von Elastomeren
Matériaux pour liaison des élastomères

(30) Priority: 06.11.2003 US 517673 P
(43) Date of publication of application: 11.05.2005
(73) Proprietor: ROHM AND HAAS COMPANY, Philadelphia PA 19106-2399 (US)
(72) Inventor: Roitman, Lipa Leon, Dayton, Ohio 45406 (US)
(74) Representative: Buckley, Guy Julian

(56) References cited:
- WO-A-98/23660
- US-A- 3 640 941
- US-A- 5 128 403
- US-A- 5 310 796

## Description

### BACKGROUND:

The present invention relates to compositions useful for bonding an elastomer substrate to at least one other substrate.

It is often desirable to bond elastomers to other substrates by using adhesive compositions. Substances that are bonded to each other with one or more adhesive compositions are herein referred to as "substrates." When at least one substrate is susceptible to corrosion, it is also often desirable that the adhesive composition not only bonds the substrates together but also contributes to protecting the corrosion-susceptible substrate from corrosion.

US Patent 5,128,403 discloses an adhesive that is described as bonding metal to elastomer; as containing a Diels-Alder adduct of perhalogenated cyclic conjugated diene and an unsaturated dienophile; as containing a phenolic resin, an aromatic hydroxy compound, a formaldehyde donor, an unsaturated crosslinker, a vulcanizing agent, and a metal oxide; and as resistant to corrosive agents.

It is desired to provide alternative compositions that are effective at bonding an elastomer substrate to other substrates and also are effective at protecting corrosion-susceptible substrates from corrosion.

### STATEMENT OF THE INVENTION:

In a first aspect of the present invention, there is provided a composition comprising at least one haloalkadiene grafted polymer, at least one multi-hydroxyl aromatic compound, and at least one polyisocyanate, wherein said composition is capable of bonding an elastomer substrate to at least one other substrate.

In a second aspect of the present invention, there is provided a bonded article comprising an elastomer substrate and at least one other substrate, bonded to each other with an adhesive formed by a process comprising mixing ingredients comprising at least one haloalkadiene grafted polydiene, at least one multi-hydroxyl aromatic compound, and at least one polyisocyanate.

### DETAILED DESCRIPTION

Substrates are said herein to be "bonded" when they are joined together and a significant amount of mechanical force must be applied to separate the substrates. When substrates are bonded with an adhesive composition, the adhesive composition may be heterogeneous or homogeneous; the adhesive composition may include a single layer of material or plural layers of material.

The elastomer substrate used in the practice of the present invention may be any of a wide variety of elastomers. One description of elastomers can be found in Textbook of Polymer Science, second edition, by F. W. Billmeyer Jr., Wiley-Interscience, 1971 ("Billmeyer"). As described by Billmeyer, elastomers are materials that stretch under tension to a new length that is generally at least 1.1 times their original length and may be many times their original length; they exhibit relatively high strength and stiffness when stretched; after deformation, they tend to recover their original shapes relatively quickly, with relatively little residual permanent deformation. For purposes of the present invention, materials exhibiting most or all of these characteristics will be considered "elastomers." Elastomers can be made from a wide variety of materials, such as for example natural rubbers, synthetic rubbers, and blends thereof. Synthetic rubbers include, for example, polybutadiene, neoprene, butyl rubber, polyisoprene, nitrile rubbers, styrene butadiene rubbers (also called SBRs), ethylene propylene diene based rubbers (some of which are called EPDM), derivatives thereof, modified versions thereof, mixtures thereof. Elastomers include both thermoplastic elastomers (also called elastoplastics or melt-processable rubbers) and crosslinked (also called vulcanized) elastomers. The present invention may be practiced to bond any elastomer. Some suitable elastomers are crosslinked elastomers, including, for example, crosslinked synthetic rubbers, crosslinked natural rubbers, and crosslinked mixtures of synthetic and natural rubbers. One group of crosslinked elastomers known to be suitable are crosslinked derivatives of natural rubber, including, for example, crosslinked chloroprene rubbers.

Some suitable elastomers include one or more additive or adjuvant or both, including, for example, fillers, antioxidants, oils, waxes.

The adhesive compositions of the present invention may be used to bond elastomers to any of a wide variety of useful materials, including for example other elastomers; non-elastomeric but flexible materials such as, for example, fabrics, foils, or films; and rigid materials such as, for example, plastics, engineering plastics, wood, and metal.

The compositions of the present invention are known to work, for example, at bonding elastomers to metal. Some compositions of the present invention are also known to aid in protecting metal substrates from corrosion.

The compositions of the present invention may be used in a variety of ways to bond an elastomer substrate to at least one other substrate. In some embodiments (herein called "single layer" embodiments), a composition of the present invention is used in such a way that it contacts both the elastomer substrate and at least one other substrate. In other embodiments (herein called "multilayer" embodiments), multiple layers of materials are used in between the elastomer substrate and at least one other substrate. In some multilayer embodiments, the composition of each layer is different from the composition of every other layer. In other multilayer embodiments, at least one layer has the same composition as at least one other layer.

In some embodiments, the elastomer substrate will be bonded to exactly one other substrate. In other embodiments, the elastomer substrate will be bonded to more than one other substrate; all of the bonds may be single layer, or all of the bonds may be multilayer, or there may be at least one single layer bond and at least one multilayer bond.

In some embodiments, one or more of the at least one other substrate is a non-elastomer (i.e., is a material that is not an elastomer). When at least one non-elastomer substrate is used in a multilayer embodiment, the layer of material in contact with the non-elastomer substrate is known herein as a "primer layer."

In multilayer embodiments, any layer of material in contact with an elastomer substrate is known herein as an "anchor layer." Any layer of material that is neither a primer layer nor an anchor layer is known herein as an "intermediate layer."

In the practice of the present invention, at least one layer of material between the elastomer substrate and an other substrate is a composition of the present invention. In single-layer embodiments, the layer of material will be a composition of the present invention. In multilayer embodiments, at least one layer of material between the elastomer substrate and the other substrate(s) will be a composition of the present invention. In multilayer embodiments, at least one composition of the present invention will be used as one or more of the following layers: the primer layer, the anchor layer, or one or more intermediate layers. Some suitable multilayer embodiments have exactly two layers ("two-layer embodiments"). In some two-layer embodiments, exactly one layer of material will be a composition of the present invention. In other two-layer embodiments, both layers of material will be compositions of the present invention; the two layers of material may be the same composition as each other or they may be compositions that are different from each other.

As defined herein, a "composite structure" is a structure formed from two or more substrates, with one or more layers of material between the substrates, and with the substrates bonded together.

The practice of the present invention involves the use of one or more polymers. Polymers are described by Billmeyer as large molecules built up by repeating smaller chemical units ("monomers"). Polymers are said herein to "include" the monomers "as polymerized units." Some polymers are homopolymers (i.e., they include only one type of monomer as polymerized units). Other polymers are copolymers (i.e., they include more than one type of monomer as polymerized units). Among copolymers, the different monomer units may be arranged in any way, including, for example, randomly, in sequence or sequences, and in blocks. Polymers may have any of a variety of structures, including, for example, linear, branched, block, graft, crosslinked, star-shaped, or combinations thereof. Polymers generally have molecular weight of 10,000 or more. Molecular weight of polymers means herein the weight-average molecular weight. One common method of measuring molecular weights of polymers is size exclusion chromatography (SEC), sometimes known as gel permeation chromatography (GPC).

One ingredient in compositions of the present invention is haloalkadiene grafted polymer. As defined herein a "haloalkadiene grafted polymer" is the product or products of reacting at least one halogenated conjugated alkadiene with at least one unsaturated polymer (i.e., a polymer that contains at least one double bond). Such reactions are generally believed to be Diels-Alder reactions. One description of such reactions is given in US 5,128,403. An alkadiene, as used herein, is a hydrocarbon that contains at least two double bonds that are not part of an aromatic ring. A conjugated alkadiene is an alkadiene that contains at least one pair of double bonds that is conjugated; a conjugated alkadiene may or may not have additional double bonds. A halogenated conjugated alkadiene is a conjugated alkadiene that has the structure of a conjugated alkadiene in which one or more hydrogen atoms has been replaced with a halogen atom; suitable halogenated conjugated alkadienes may be made by any method. Suitable halogenated conjugated alkadienes include, for example, halogenated conjugated cyclic alkadienes. Halogenated conjugated cyclic alkadienes known to be useful include, for example, hexahalocyclopentadienes, such as, for example, hexafluorocyclopentadiene, hexabromocyclopentadiene, 5,5-difluorotetrachlorcyclopentadiene, 5,5-dibromotetrachlorocyclopentadiene, hexachlorocyclopentadiene, substituted versions thereof, and mixtures thereof; one suitable halogenated conjugated cyclic alkadiene is, for example, hexachlorocyclopentadiene.

One group of useful unsaturated polymers is the group of polydienes. Polydienes are described, for example, by K.J. Saunders in Organic Polymer Chemistry, Chapman and Hall, London, 1973. Polydienes include natural rubber, its derivatives, and polymers and copolymers that include conjugated dienes such as, for example, isoprene, butadiene, vinylpyridine, chloroprene, and mixtures thereof. Some examples of polydienes are natural rubber, derivatives of natural rubber such as chlorinated rubber, polybutadiene, polyisoprene, and copolymers of conjugated dienes. Further examples of polydienes are copolymers in which one or more conjugated diene is copolymerized with at least one other monomer, such as, for example, styrene, isobutene, acrylonitrile, ethylene, propylene, and mixtures thereof.

The class of polydienes also includes derivatives of the polydienes listed herein above. Such derivatives include, for example, halogenated polydienes, chain-extended polydienes, and polydienes with terminal functional groups such as, for example, hydroxyl groups, carboxyl groups, mercaptyl groups, and amine groups.

Unsaturated polydienes (i.e., polydienes with at least one double bond) are suitable for reacting with a halogenated conjugated alkadiene to form the haloalkadiene grafted polymers of the present invention. Some suitable unsaturated polydienes include one or more conjugated dienes as polymerized units. Some of the suitable unsaturated polydienes that include one or more conjugated dienes also include units of other monomoners, as discussed herein above. When conjugated dienes are included, they may be included as one or more of the following type of polymerized units: cis units, trans units, 1,2 units, and 1,4 units. For example, one suitable type of unsaturated polydiene is the type that contains unsaturated polydienes that include randomly-distributed cis units, trans units, and 1,2 units; one example of this type of unsaturated polydiene is an unsaturated polydiene that is entirely made of randomly-distrubuted cis units, trans units, and 1,2 units. Another suitable type of unsaturated polydiene contains unsaturated polydienes that include 50% or more by weight of 1,2 units, based on the weight of the unsaturated polydiene. Another suitable type of unsaturated polydiene contains unsaturated polydienes that include 50% or more by weight of cis units, based on the weight of the unsaturated polydiene.

Generally, blends of suitable unsaturated polydienes are also suitable. Some suitable unsaturated polydienes are blends of two or more of the above-mentioned types of suitable unsaturated polydienes. For example, one or more first unsaturated polydienes that are made entirely of randomly-distributed cis units, trans units, and 1,2 units could be blended with one or more second unsaturated polydienes, where the second unsaturated polydienes could contain one or more unsaturated polydienes that have 50% or more by weight of cis units, based on the weight of the second unsaturated polydiene, or where the second unsaturated polydiene could contain one or more unsaturated polydienes that have 50% or more by weight of trans units, based on the weight of the second unsaturated polydiene. Among embodiments in which the unsaturated polydiene is a blend of two types of unsaturated polydienes, the weight ratio of one type to the other type may be any ratio, including, for example, 10 or less; and 5 or less; and 2 or less; and 1 or less; and also including, for example, 0.1 or more; and 0.2 or more; and 0.5 or more.

Some suitable unsaturated polydienes include 50% or more butadiene units, by weight based on the weight of the unsaturated polydiene. Some suitable unsaturated polydienes include 80% or more by weight units of butadiene, based on the weight of the polydiene; or 90% or more; or 100%.

In embodiments where at least one halogenated conjugated alkadiene is reacted with at least one unsaturated polydiene, the weight ratio of halogenated conjugated alkadiene to unsaturated polydiene can be any ratio, including, for example, 0.2 or more; and 0.25 or more; and 0.33 or more; and 0.5 or more; and 1 or more; and 2 or more; and also including, for example, 20 or less; and 10 or less; and 5 or less; and 4 or less; and 3 or less; and 2 or less. In some embodiments, the weight ratio of halogenated conjugated alkadiene to unsaturated polydiene is between 0.33 and 0.5; or between 0.5 and 1; or between 1 and 2; or between 2 and 3; or between 3 and 4.

Some suitable compositions of the present invention have 2% or more haloalkadiene grafted polymer, by weight based on the total weight of the composition; other suitable compositions have 5% or more, or 9% or more, by weight based on the total weight of the composition. Some suitable compositions of the present invention have 30% or less haloalkadiene grafted polymer, by weight based on the total weight of the composition; other suitable compositions have 20% or less, or 15% or less, by weight based on the total weight of the composition.

Compositions of the present invention also include at least one multi-hydroxyl aromatic compound. An "aromatic compound," as used herein, is any compound that contains an aromatic ring. Aromatic compounds include, for example, benzene, naphthalene, anthracene, derivatives thereof, substituted versions thereof, and mixtures thereof. A multi-hydroxyl aromatic compound is an aromatic compound with two or more hydroxy groups. The multi-hydroxyl aromatic compound may or may not have additional substituents, such as, for example, hydrocarbon groups, halogen atoms, and combinations thereof. Suitable multi-hydroxyl aromatic compounds include, for example, multi-hydroxybenzenes, multi-hydroxy anthracenes, multi-hydroxynaphthalenes, and mixtures thereof. Suitable multi-hydroxyl aromatic compounds include, for example, hydroquinone, resorcinol, catechol, 1,2,3 trihydroxybenzene, 1,2,4 trihydroxybenzene, 1,3,5 trihydroxybenzene, other trihydroxybenzenes, 1,2,3,5 tetrahydroxybenzene, other tetrahydroxybenzenes, substituted versions thereof, and mixtures thereof. Some suitable multi-hydroxyl aromatic compounds are, for example, hydroquinone, resorcinol, catechol, and mixtures thereof. Resorcinol is known to be one useful multi-hydroxyl aromatic compound.

Some suitable compositions contain 0.5% or more multi-hydroxyl aromatic compound, by weight based on the total weight of the composition; other suitable compositions have 1.0% or more, or 1.5% or more, by weight based on the total weight of the composition. Some suitable compositions contain 20% or less multi-hydroxyl aromatic compound, by weight based on the total weight of the composition; other suitable compositions have 10% or less, or 6% or less, by weight based on the total weight of the composition.

Compositions of the present invention include at least one polyisocyanate, i.e., a compound bearing at least two isocyanate groups. Polyisocyanates which may be used include, for example, aromatic polyisocyanates, aliphatic polyisocyanates, cycloaliphatic polyisocyanates, and mixtures thereof. Suitable polyisocyanates include, for example, m-phenylene diisocyanate, 2,4-toluene diisocyanate, 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'-diphenylmethane diisocyanate (also called 4,4'-MDI), 2,4'-diphenylmethane diisocyanate (also called 2,4'-MDI), 4,4'-biphenylene diisocyanate, 3,3'-dimethoxy-4,4'-biphenyl diisocyanate, 3,3'-dimethyl-4,4'-biphenyl diisocyanate, 3,3'-dimethyl-4,4'-diphenylmethane diisocyanate, isophorone diisocyanate, 4,4',4"-triphenylmethane triisocyanate, polymethylene polyphenylene polyisocyanate, 2,4,6-toluene triisocyanate, 4,4'-dimethyl-diphenylmethane tetraisocyanate, and mixtures thereof. As used herein, "MDI" means a composition that contains 2,4' MDI, 4,4' MDI, or a mixture thereof.

Also suitable as polyisocyanates of the present invention are polymeric polyisocyanates, including, for example, polymethylene polyphenylisocyanates such as, for example, polymeric MDI. Additional examples of suitable polyisocyanates are mixtures of MDI and polymeric polyisocyanates. Some suitable polymeric MDI's and their mixtures with MDI are available from Dow Chemical Company as PAPI™ products.

Another class of suitable polyisocyanates are blocked polyisocyanates, which are polyisocyanates in which one or more of the isocyanate groups has been blocked. A blocked isocyanate group, also called a capped isocyanate group, as described, for example, by G. Oertel in Polyurethane Handbook, 2nd edition, Hanser publishers, 1994, is an isocyanate group that has been reacted with another compound to form a thermally weak bond. This thermally weak bond is usefully stable at room temperature but fully or partially dissociates at elevated temperatures (such as temperatures used for drying and/or crosslinking the compositions of the present invention), thus freeing the isocyanate group to participate in chemical reactions.

Mixtures of suitable polyisocyanates are also suitable.

Some suitable compositions of the present invention have 0.005% or more polyisocyanate, by weight based on the total weight of the composition; other suitable compositions have 0.008% or more, or 0.015% or more, or 0.025% or more, by weight based on the total weight of the composition. Some suitable compositions of the present invention have 3% or less polyisocyanate, by weight based on the total weight of the composition; other suitable compositions have 1% or less, or 0.5% or less, by weight based on the total weight of the composition.

In some embodiments, the composition of the present invention includes at least one methylene donor compound. A "methylene donor compound" as used herein is a compound capable of forming at least one methylene bridge or linkage by reacting with at least one hydroxyl group on another compound. Examples of suitable methylene donor compounds are hexamethylene tetramine, paraformaldehyde, s-trioxane, anhydroformaldehydeaniline, ethylene diamine formaldehyde, methylol derivatives of urea and formaldehyde, acetaldehyde, furfural, and methylol phenolic compounds. One suitable methylene donor compound is hexamethylene tetramine.

Some suitable compositions of the present invention have 0.5% or more methylene donor compound, by weight based on the total weight of the composition; other suitable compositions have 1.0% or more, or 1.5% or more, by weight based on the total weight of the composition. Some suitable compositions of the present invention have 15% or less methylene donor compound, by weight based on the total weight of the composition; other suitable compositions have 10% or less, or 6% or less, by weight based on the total weight of the composition.

Another ingredient that may be used in some embodiments of the present invention is a vulcanizing agent containing one or more of selenium, tellurium, or sulfur. These three elements form a variety of compounds and alloys with each other, as disclosed by J. E. Hoffman in "Selenium and Selenium Compounds" and in "Tellurium and Tellurium Compounds," both in Kirk-Othmer Encyclopedia of Chemical Technology, 4th Edition, John Wiley & Sons, Inc., 1997. Sulfur, tellurium, and selenium are known as vulcanizing agents, as disclosed by Weih, et. al. in US Patent 6,268,422. Suitable vulcanizing agents in this category include, for example, sulfur, selenium, tellurium, compounds and alloys thereof (including, for example, compounds of selenium and sulfur, and compounds of tellurium and sulfur), and mixtures thereof. A suitable compound of selenium and sulfur is selenium disulfide. Compounds of tellurium and sulfur are suitable vulcanizing agents and are often referred to as "alloys." One suitable vulcanizing agent is selenium.

Some suitable compositions of the present invention have 0.2% or more vulcanizing agent, by weight based on the total weight of the composition; other suitable compositions have 0.5% or more, or 0.9% or more, by weight based on the total weight of the composition. Some suitable compositions of the present invention have 10% or less vulcanizing agent, by weight based on the total weight of the composition; other suitable compositions have 5% or less, or 2.5% or less, by weight based on the total weight of the composition. Other suitable compositions of the present invention have 0% vulcanizing agent. In some embodiments, compositions of the present invention that contain vulcanizing agent are used to form anchor layers. In other independent embodiments, compositions of the present invention with 0% vulcanizing agent are used as primers. Also contemplated are embodiments in which an anchor layer contains at least one vulcanizing agent and a primer contains no vulcanizing agent.

Some embodiments of the present invention contain little or no phenolic resin. Phenolic resins are condensation products of one or more aldehydes with one or more phenolic compounds. Phenolic resins have molecular weight of 300 to 2,000. Some embodiments of the present invention contain 0.5% or less; or 0.2% or less; or 0.1% or less; or 0% phenolic resin by weight based on the total weight of the composition.

Some embodiments of the present invention contain little or no unsaturated elastomer crosslinker. Unsaturated elastomer crosslinkers are unsaturated compounds that, when reacted with elastomers, sometimes lead to crosslinking of the elastomer. Unsaturated crosslinkers include, for example, quinone dioxime, dibenzoquinone dioxime, 1,2,4,5-tetrachlorobenzoquinone, similar compounds, derivatives thereof, substituted versions thereof, and mixtures thereof. Some embodiments of the present invention contain 0.01% or less; or 0% any compound or mixture of compounds selected from quinone dioxime, dibenzoquinone dioxime, and 1,2,4,5-tetrachlorobenzoquinone, by weight based on the total weight of the composition. Some embodiments of the present invention contain 0.01% or less; or 0% any unsaturated elastomer crosslinker or mixture of unsaturated elastomer crosslinkers, by weight based on the total weight of the composition.

Some embodiments of the present invention contain little or no epoxide compounds. An epoxide compound is any compound containing an epoxide group, which is a three-atom ring group, where the three atoms are one oxygen atom and two carbon atoms. Some embodiments contain 2% or less; or 1% or less; or 0.5% or less; or 0% epichlorohydrin, by weight based on the total weight of the composition. Some embodiments contain 2% or less; or 1% or less; or 0.5% or less; or 0% any compound or compounds from the group of epichlorohydrin, β-methyl epichlorohydrin, epibromohydrin, and β-methyl epibromohydrin, by weight based on the total weight of the composition. Some embodiments contain 2% or less; or 1% or less; or 0.5% or less; or 0% any epihalohydrin or substituted epihalohydrin, by weight based on the total weight of the composition. Some embodiments contain 2% or less; or 1% or less; or 0.5% or less; or 0% any epoxide compound or compounds, by weight based on the total weight of the composition.

Some compositions of the present invention contain one or more solvents. Suitable solvents include any liquid that will dissolve the other ingredients of the present invention and that will evaporate usefully quickly under ordinary drying conditions. Some suitable solvents are, for example, petroleum distillates, hydrocarbons, ketones, and coal-tar distillates. Some suitable petroleum distillates are, for example, petroleum ethers. Some suitable hydrocarbons are, for example, aliphatic hydrocarbons (such as, for example, alkanes and mixtures of alkanes) and aromatic hydrocarbons, (such as, for example, benzene and alkyl-substituted benzenes, including, for example, toluene, 1,2,4 trimethyl benzene, and mesitylene). Some suitable ketones are, for example, di-alkyl ketones, including, for example, acetone, methyl ethyl ketone (MEK), and methyl isobutyl ketone (MIBK). Suitable coal-tar distillates include, for example, solvent naptha and heavy naptha. Mixtures of suitable solvents are also suitable.

In one embodiment, the solvent is a mixture of MEK, toluene, solvent naptha, 1,2,4 trimethyl benzene, heavy naptha, and mesitylene. In another embodiment, the solvent is a mixture of MEK, toluene, solvent naptha, 1,2,4 trimethyl benzene, heavy naptha, and MIBK.

Some suitable compositions of the present invention have 40% or more solvent by weight based on the total weight of the composition; other suitable compositions have 60% or more, or 70% or more solvent by weight based on the total weight of the composition. Some suitable compositions of the present invention have 95% or less solvent by weight, based on the total weight of the composition; other suitable compositions have 87% or less, or 80% or less solvent by weight based on the total weight of the composition.

To make compositions of the present invention, the ingredients may be combined by any of a wide variety of methods. For example, ingredients may be added in various orders. In some embodiments, two or more ingredients are selected and pre-combined; that is, before the selected ingredients are added to the remainder of the ingredients, the selected ingredients are mixed together and, optionally, heated together, or, optionally, stored together, or, optionally, mixed and heated and stored together, with or without stirring. For example, in some embodiments, at least one haloalkadiene grafted polymer is mixed with at least one polyisocyanate, heated to a temperature of 35°C or higher, and kept at that temperature for one hour or longer; the result of this mixing and heating is subsequently added to other ingredients of the composition. Independently, in some embodiments, some of the ingredients are mixed and stirred together to form a slurry, and then further ingredients (for example, at least one haloalkadiene grafted polymer and at least one solvent) are mixed with the slurry.

In the practice of the present invention, when ingredients are mixed, the mixing may be performed by any method known in the art, such as, for example, stirring, agitating, or a combination thereof. In some embodiments, the mixing is performed partially of fully by exposing the ingredients to a mechanical mixing device such as, for example, a static mixer, an impeller, a shaker, a ball mill, a similar device, or a combination thereof.

In some embodiments of the present invention, a composite structure is formed. Included in the composite structure are an elastomer substrate and at least one other substrate. In some embodiments, one or more of the at least one other substrates is a metal substrate; in such embodiments, the metal substrate may be any of the various grades and alloys of metals, such as, for example, aluminum, iron, galvanized iron, tin, nickel, steel (including stainless steel and galvanized steel), brass, and alloys thereof. Some suitable metals have 0 to 25% magnesium, by weight based on the weight of the metal; some suitable metals have 0 to 10% magnesium, and some suitable metals have 0 to 2% magnesium, by weight based on the weight of the metal. Also suitable are metals with 50% or more iron, by weight based on the weight of the metal; also suitable is steel, including stainless steel, alloy steel, cold-rolled steel, soft steel, hard steel, and other types of steel. One suitable metal is steel with 0 to 2% magnesium, by weight based on the weight of the metal.

In the practice of the present invention, when a primer is used, it may be applied by any of a variety of methods known in the art, such as, for example, knife coating, dip coating, spin coating, roller coating, flow coating, brush coating, coating by extrusion, drip-and-wipe coating, or spray coating. In some embodiments, after the primer is applied, it is heated until it dries. In some embodiments, temperatures above 30°C are used for drying the primer; in some embodiments, 35°C to 60°C is used for drying the primer. Suitable thickness of dry primer is above 0.001 mm; in some embodiments, the thickness of dry primer is 0.002 mm or more; or 0.003 mm or more; or 0.005 mm or more. In some embodiments, the thickness of dry primer is 0.03 mm or less; or 0.01 mm or less; or 0.009 mm or less.

Suitable methods for applying the anchor layer are the same as those for applying the optional primer; the method of applying the anchor layer may be the same as or different from the method used for applying the optional primer. In some embodiments, temperatures above 30°C are used for drying the anchor layer; in some embodiments, 35°C to 60°C is used for drying the anchor layer. Suitable thickness of dry anchor layer is above 0.003mm; in some embodiments, the thickness of the dry anchor layer is 0.005 mm or more; or 0.01 mm or more; or 0.015 mm or more. In some embodiments, the thickness of the dry anchor layer is 0.1 mm or less; or 0.05 mm or less; or 0.025 mm or less.

If any intermediate layers are used, the suitable means of applying intermediate layers and the suitable thicknesses of intermediate layers are the same as those of anchor layers.

The composite structure may be prepared by any means; a variety of means are known in the art. In some embodiments, the anchor layer is applied directly to the elastomer, which may be in a vulcanized or unvulcanized state. In other embodiments, the anchor layer is applied to a non-elastomer substrate, or to a primer, or to an intermediate layer, and then the elastomer (in a vulcanized or unvulcanized state) is applied to the anchor layer. In some embodiments, any of the layers will be dried before another layer is applied to it. In some embodiments, one or more layers may be applied onto an earlier layer that is liquid or partially dry.

In some embodiments, a composite article is assembled while the elastomer is in an unvulcanized state. In some of such embodiments, the composite article is then subjected to mechanical pressure or elevated temperature or both. The elevated temperature, usually 35°C or higher, the pressure, or both, will be chosen to give a composite article with the most desired properties. For example, in one embodiment, a primer layer is applied to a non-elastomer substrate and dried; then an anchor layer is applied to the primer layer and dried; then unvulcanized rubber is applied to the anchor layer; then the entire composite structure is heated.

In addition to the ingredients discussed herein above, a composition of the present invention may optionally contain further ingredients to improve the desired properties of the composition. Such further ingredients include, for example, one or more inorganic compounds. In some embodiments, inorganic compounds are included for one or more of the following purposes: to activate or otherwise enhance one or more crosslinking reactions; as filler; to improve appearance; or other purposes. Some inorganic compounds that are optionally included in some embodiments are, for example, oxides (such as, for example, silicon oxides, zinc oxide, or other metal oxides) and carbon black.

It is to be understood that for purposes of the present specification and claims that the range and ratio limits recited herein can be combined. For example, if ranges of 60 to 120 and 80 to 110 are recited for a particular parameter, it is understood that the ranges of 60 to 110 and 80 to 120 are also contemplated. Also, as further examples, if minimum values for a particular parameter of 1, 2, and 3 are recited, and if maximum values for that parameter of 9 and 10 are recited, then it is understood that the following ranges are all contemplated: 1 to 9; 1 to 10; 2 to 9; 2 to 10; 3 to 9; and 3 to 10.

In the Examples below, the following abbreviations, formulations, and procedures were used:

### Abbreviations:

- GB steel: = grit-blasted steel
- HEX: = hexachlorocyclopentadiene
- HAD-1: = Haloalkadiene grafted polymer.
- HAD-2: = Haloalkadiene grafted polymer; higher degree of grafting than HAD-1.

### Formulation: Rubber compound RH

A rubber compound was made by combining the following ingredients ("PBW = parts by weight). This rubber compound was the rubber used in all the test procedures reported herein below.

| Ingredient | PBW | Description | Supplier |
|---|---|---|---|
| Crude SMR CV 60 | 60 | Standard Malasian Rubber¹ | commodity |
| Corax™ N550 FEF | 30 | Carbon black | Shinwoo Advanced Materials Co. |
| AZO 66T | 3 | zinc oxide powder | US Zinc Co. |
| Stearic Acid | 0.6 | | commodity |
| Santoflex™ IPPD FLK | 0.6 | N-isopropyl-N'-phenyl-p-pheylenediamine | Flexsys Co. |
| Okerin™ 7240H PELL | 0.6 | Blend of microcrystalline wax and paraffin; pellets | Sovereign Chemical |
| Cyclolube™ RPO | 6 | Oil | Harwick Standard |

| | | | |
|---|---|---|---|
| note¹: Mooney viscosity (ML, 1+4, 100°C) 60±5 | | | |

### Bonding Rubber to Metal Procedure

In the test procedures and Examples below, when rubber is said to be bonded to metal, the bonding procedure is this: a primer is applied to the metal and heated at 65-70°C for about 5 minutes until it is dry. The anchor layer is then applied to the primer layer and heated at 65-70°C for about 5 minutes until it is dry. The uncured rubber composition RH is applied to the anchor layer and heated for about 15 minutes at about 160°C until the rubber composition is vulcanized.

### Injection Button Test Procedure

On one flat face of a metal cylinder, primer is applied and heated until it is dry. An anchor layer is then applied to the primer layer and heated until the anchor layer is dry. The same process is also performed on one flat face of a second metal cylinder. A layer of uncured rubber composition RH is placed in contact with these two coated flat faces of the two metal cylinders, in such a way that the two coated faces are parallel to each other and are facing each other. The entire assembly is then heated until the rubber composition is vulcanized. The resultant assembly is called a button. Then, one metal cylinder is placed in one jaw of a tensile tester, and the other metal cylinder is placed in the other jaw of the tensile tester, and the tensile tester is then used to pull the metal cylinders apart. The maximum force exerted is recorded. The experiment is repeated with four identical samples, and the average of the maximum force values is reported as the result of the button test.

### Lap Shear Adhesion Test Procedure

A rectangular piece of rubber is bonded to a rectangular piece of GB steel, using the composition of interest, to form a composite structure. At one end of the composite structure is a free portion of the rectangular piece of rubber; at the other end is a portion of the rectangular piece of GB steel. A "free" portion of rubber is a portion that is not adjacent to any of the GB steel, and a "free" portion of GB steel is a portion that is not adjacent to any of the rubber.

The composite is placed in a tensile tester, with the free portion of rubber in one jaw and the free portion of GB steel in the other jaw. The tensile tester is used to pull the jaws apart, and the maximum force is recorded. The experiment is repeated with four identical samples, and the average of the maximum force values is reported.

### Peel Adhesion Test Procedure

Using the adhesive of interest, a portion of a piece of rubber is bonded to a relatively thin, rectangular piece of GB steel. That is, one portion of the piece of rubber is bonded to the rectangular face of the piece of GB steel and the other portion of the piece of rubber is not. The piece of GB steel is held horizontally in one jaw of a tensile tester, with the face bonded to the rubber facing the other jaw of the tensile tester. The non-bonded portion of the piece of rubber is held in the other jaw. The tensile tester is used to pull the jaws apart vertically, and the maximum force is recorded. The experiment is repeated with four identical samples, and the average of the maximum force values is reported.

### Corrosion Resistance Test Procedure

Using the adhesive of interest, a portion of a piece of rubber is bonded to a relatively thin, rectangular piece of GB steel. That is, one portion of the piece of rubber is bonded to the GB steel and the other portion of the piece of rubber is not. The piece of GB steel is held horizontally in a salt-spray chamber, with the face bonded to the rubber facing downward. A weight of 2 kg attached to the portion of the rubber that is not bonded to the GB steel. Samples are exposed to salt fog for 200 hours and then inspected. For each sample, the amount of de-bonding around the perimeter of the bond is reported.

### EXAMPLES

### Modified haloalkadiene grafted polymers

Compositions using haloalkadiene grafted polymers were prepared. Each haloalkadiene grafted polymer was held with PAPI™-27 at 80°C overnight. The haloalkadiene grafted polymers used and the amounts of PAPI™-27 were as follows:

| Composition | Type of haloalkadiene grafted polymer | Amount of haloalkadiene grafted polymer (g) | Amount of PAPI™-27 (g) |
|---|---|---|---|
| M1 | HAD-1 | 701.7 | 1.5 |
| M2 | HAD-1 | 603.5 | 0.7 |
| M3 | HAD-2 | 533.0 | 4.6 |
| M4 | HAD-2 | 608.0 | 12.3 |

### Altered modified haloalkadiene grafted polymers

Portions of compositions M1-M4 were further altered by addition of n-butanol in amounts as follows:

| Composition | Type of modified haloalkadiene grafted polymer | Amount of modified haloalkadiene grafted polymer (g) | Amount of n-butanol (g) |
|---|---|---|---|
| B1 | M1 | 297.4 | 0.64 |
| B2 | M1 | 216.2 | 1.0 |
| B3 | M2 | 195.9 | 1.3 |
| B4 | M2 | 210.7 | 3.1 |

### Example Pre-Primer Slurries PSA, PSB, PSC, PSD, and Comparative Slurry Comp-PS

Slurries were made by mixing (and milling in a ball mill) the following ingredients. Numbers shown are PBW (parts by weight):

| **ingredient** | **PSA** | **PSB** | **PSC** | **PSC** | **Comp-PS** |
|---|---|---|---|---|---|
| MEK | 40.1 | 40.1 | 40.1 | 40.1 | 40.1 |
| resorcinol | 7.0 | 7.0 | 7.0 | 7.0 | 7.0 |
| toluene | 31.7 | 31.7 | 31.7 | 31.7 | 31.7 |
| hexamine | 7.0 | 7.0 | 7.0 | 7.0 | 7.0 |
| Furnex NS | 0.6 | 0.6 | 0.6 | 0.6 | 0.6 |
| molywhite 101 | 5.9 | 5.9 | 5.9 | 5.9 | 5.9 |
| Ti-Pure R-900 | 3.5 | 3.5 | 3.5 | 3.5 | 3.5 |
| aerosil 200 | 1.8 | 1.8 | 1.8 | 1.8 | 1.8 |
| M4 | 2.4 | | | | |
| M3 | | 2.4 | | | |
| B4 | | | 2.4 | | |
| B3 | | | | 2.4 | |
| HAD-2 | | | | | 2.4 |

### Example Primers PA, PB, PC, PD, and Comparative Primer Comp-P

Primers were made by mixing the following ingredients. Numbers shown are PBW (parts by weight).

| **ingredient** | **PA** | **PB** | **PC** | **PD** | **Comp-P** |
|---|---|---|---|---|---|
| PSA | 72.1 | | | | |
| PSB | | 72.1 | | | |
| PSC | | | 72.1 | | |
| PSD | | | | 72.1 | |
| Comp-PS | | | | | 72.1 |
| M4 | 15.2 | | | | |
| M3 | | 15.2 | | | |
| B4 | | | 15.2 | | |
| B3 | | | | 15.2 | |
| HAD-2 | | | | | 15.2 |
| toluene | 10.2 | 10.2 | 10.2 | 10.2 | 10.2 |
| MEK | 2.5 | 2.5 | 2.5 | 2.5 | 2.5 |

### Example Pre-Adhesive Slurries ASA, ASB, ASC, ASD, and Comparative Slurry Comp-AS

Slurries were made by mixing (and milling in a ball mill) the following ingredients. Numbers shown are PBW (parts by weight):

| **ingredient** | **ASA** | **ASB** | **ASC** | **ASC** | **Comp-AS** |
|---|---|---|---|---|---|
| MEK | 21.9 | 21.9 | 21.9 | 21.9 | 21.9 |
| resorcinol | 6.6 | 6.6 | 6.6 | 6.6 | 6.6 |
| toluene | 47.5 | 47.5 | 47.5 | 47.5 | 47.5 |
| hexamine | 6.6 | 6.6 | 6.6 | 6.6 | 6.6 |
| Vulcan 9 | 2.2 | 2.2 | 2.2 | 2.2 | 2.2 |
| molywhite 101 | 5.5 | 5.5 | 5.5 | 5.5 | 5.5 |
| selenium | 2.2 | 2.2 | 2.2 | 2.2 | 2.2 |
| aerosil 200 | 3.0 | 3.0 | 3.0 | 3.0 | 3.0 |
| M4 | 4.4 | | | | |
| M3 | | 4.4 | | | |
| B4 | | | 4.4 | | |
| B3 | | | | 4.4 | |
| HAD-2 | | | | | 4.4 |

### Example Adhesives AA, AB, AC, AD, and Comparative Adhesive Comp-A

Primers were made by mixing (and milling in a ball mill) the following ingredients. Numbers shown are PBW (parts by weight):

| **ingredient** | **AA** | **AB** | **AC** | **AD** | **Comp-A** |
|---|---|---|---|---|---|
| ASA | 72.4 | | | | |
| ASB | | 72.4 | | | |
| ASC | | | 72.4 | | |
| ASD | | | | 72.4 | |
| Comp-AS | | | | | 72.4 |
| M1 | 12.8 | | | | |
| M2 | | 12.8 | | | |
| B1 | | | 12.8 | | |
| B2 | | | | 12.8 | |
| HAD-1 | | | | | 12.8 |
| toluene | 12.2 | 12.2 | 12.2 | 12.2 | 12.2 |
| MEK | 2.7 | 2.7 | 2.7 | 2.7 | 2.7 |

### Examples 1, 2, 3, and 4; and Comparative C-1:

Samples were prepared for the Button test using the primers and adhesives shown in the following table, along with the Button test results:

| **Example** | **Primer** | **Adhesive** | **Button Test**; **kg (lb)** |
|---|---|---|---|
| 1 | PA | AF | 656 ( 1446) |
| 2 | PB | AG | 660 (1454) |
| 3 | PC | AH | 630 (1388) |
| 4 | PD | AI | 723 (1592) |
| C-1 | Comp-P | Comp-A | 708 (1560) |

### Examples 5, 6, 7, and 8; and Comparative C-2:

Samples were prepared for the Lap Shear test using the primers and adhesives shown in the following table, along with the Lap Shear test results:

| **Example** | **Primer** | **Adhesive** | **Lap Shear Test**; **kg (lb)** |
|---|---|---|---|
| 5 | PA | AF | 827 (1821) |
| 6 | PB | AG | 807 (1777) |
| 7 | PC | AH | 868 (1912) |
| 8 | PD | AI | 818 (1801) |
| C-2 | Comp-P | Comp-A | 860 (1894) |

### Examples 9, 10, 11, and 12; and Comparative C-3:

Samples were prepared for the Peel test using the primers and adhesives shown in the following table, along with the Peel test results:

| **Example** | **Primer** | **Adhesive** | **Peel Test; kg (lb)** |
|---|---|---|---|
| 9 | PA | AF | 66 (145) |
| 10 | PB | AG | 70 (153) |
| 11 | PC | AH | 65 (143) |
| 12 | PD | AI | 70 (154) |
| C-3 | Comp-P | Comp-A | 71 (157) |

### Examples 13, 14, 15, and 16; and Comparative C-4:

Samples were prepared for the Corrosion Resistance test using the primers and adhesives shown in the following table, along with the Corrosion Resistance test results:

| **Example** | **Primer** | **Adhesive** | **Corrosion Resistance Test (debonding distance)** |
|---|---|---|---|
| 13 | PA | AF | less than 1mm |
| 14 | PB | AG | less than 1mm |
| 15 | PC | AH | less than 1mm |
| 16 | PD | AI | less than 1mm |
| C-4 | Comp-P | Comp-A | more than 1mm |

## Claims

1. A composition comprising at least one haloalkadiene grafted polymer, at least one multi-hydroxyl aromatic compound, and at least one polyisocyanate, wherein said composition is capable of bonding an elastomer substrate to at least one other substrate.

2. The composition of claim 1 wherein said haloalkadiene grafted polymer comprises at least one product of reacting at least one halogenated cyclic conjugated alkadiene with at least one unsaturated polydiene that comprises 50% or more butadiene units by weight based on the weight of said unsaturated polydiene.

3. The composition of claim 1 wherein said multi-hydroxyl aromatic compound comprises resorcinol.

4. The composition of claim 1, further comprising at least one methylene donor compound.

5. The composition of claim 4, wherein said methylene donor compound is hexamethylenetetramine.

6. The composition of claim 1, further comprising at least one vulcanizing agent selected from the group consisting of selenium, sulfur, tellurium, compounds thereof, alloys thereof, and mixtures thereof.

7. The composition of claim 1, wherein said polyisocyanate comprises at least one polymeric polyisocyanate.

8. The composition of claim 1; further comprising at least one methylene donor compound;
further comprising at least one vulcanizing agent selected from the group consisting of selenium, sulfur, tellurium, compounds thereof, alloys thereof, and mixtures thereof;
wherein said haloalkadiene grafted polymer comprises at least one product of reacting at least one halogenated cyclic conjugated alkadiene with at least one unsaturated polydiene that comprises 50% or more butadiene units by weight based on the weight of said unsaturated polydiene;
wherein said multi-hydroxyl aromatic compound comprises resorcinol; and
wherein said polyisocyanate comprises at least one polymeric polyisocyanate.

9. A bonded article comprising an elastomer substrate and at least one other substrate, bonded to each other with an adhesive formed by a process comprising mixing ingredients comprising at least one haloalkadiene grafted polydiene, at least one multi-hydroxyl aromatic compound, and at least one polyisocyanate.

10. The bonded article of claim 9;
wherein said haloalkadiene grafted polymer comprises at least one product of reacting at least one halogenated cyclic conjugated alkadiene with at least one unsaturated polydiene that comprises 50% or more butadiene units by weight based on the weight of said unsaturated polydiene;
wherein said multi-hydroxyl aromatic compound comprises resorcinol;
wherein said ingredients further comprise at least one methylene donor compound; and
wherein said polyisocyanate comprises at least one polymeric polyisocyanate.

## Patentansprüche

1. Zusammensetzung, umfassend mindestens ein Halogenalkadien-gepfropftes Polymer, mindestens eine aromatische Verbindung mit mehreren Hydroxylgruppen und mindestens ein Polyisocyanat, wobei die Zusammensetzung befähigt ist, ein Elastomersubstrat an mindestens ein anderes Substrat zu binden.

2. Zusammensetzung nach Anspruch 1, wobei das Halogenalkadien-gepfropfte Polymer mindestens ein Produkt vom Umsetzen mindestens eines halogenierten cyclischen konjugierten Alkadiens mit mindestens einem ungesättigten Polydien umfasst, welches 50 Gewichtsprozent oder mehr Butadien-Einheiten, bezogen auf das Gewicht des ungesättigten Polydiens, umfasst.

3. Zusammensetzung nach Anspruch 1, wobei die aromatische Verbindung mit mehreren Hydroxylgruppen Resorcinol umfasst.

4. Zusammensetzung nach Anspruch 1, weiter umfassend mindestens eine Methylendonorverbindung.

5. Zusammensetzung nach Anspruch 4, wobei die Methylendonorverbindung Hexamethylentetramin ist.

6. Zusammensetzung nach Anspruch 1, weiter umfassend mindestens ein Vulkanisierungsmittel, ausgewählt aus der Gruppe, bestehend aus Selen, Schwefel, Tellur, Verbindungen davon, Legierungen davon und Gemische davon.

7. Zusammensetzung nach Anspruch 1, wobei das Polyisocyanat mindestens ein polymeres Polyisocyanat umfasst.

8. Zusammensetzung nach Anspruch 1, weiter umfassend mindestens eine Methylendonorverbindung, weiter umfassend mindestens ein Vulkanisierungsmittel, ausgewählt aus der Gruppe, bestehend aus Selen, Schwefel, Tellur, Verbindungen davon, Legierungen davon und Gemischen davon,
wobei das Halogenalkadien-gepfropfte Polymer mindestens ein Produkt vom Umsetzen mindestens eines halogenierten cyclischen konjugierten Alkadiens mit mindestens einem ungesättigten Polydien umfasst, welches 50 Gewichtsprozent oder mehr Butadien-Einheiten, bezogen auf das Gewicht des ungesättigten Polydiens, umfasst,
wobei die aromatische Verbindung mit mehreren Hydroxylgruppen Resorcinol umfasst, und
wobei das Polyisocyanat mindestens ein polymeres Polyisocyanat umfasst.

9. Verbundener Gegenstand, umfassend ein Elastomersubstrat und mindestens ein anderes Substrat, die durch ein Haftmittel zusammengebunden sind, welches durch ein Verfahren, umfassend das Mischen von Inhaltsstoffen, umfassend mindestens ein Halogenalkadien-gepfropftes Polydien, mindestens eine aromatische Verbindung mit mehreren Hydroxylgruppen und mindestens ein Polyisocyanat, gebildet ist.

10. Verbundener Gegenstand nach Anspruch 9, wobei das Halogenalkadien-gepfropfte Polymer mindestens ein Produkt vom Umsetzen mindestens eines halogenierten cyclischen konjugierten Alkadiens mit mindestens einem ungesättigten Polydien umfasst, welches 50 Gewichtsprozent oder mehr Butadien-Einheiten, bezogen auf das Gewicht des ungesättigten Polydiens, umfasst,
wobei die aromatische Verbindung mit mehreren Hydroxylgruppen Resorcinol umfasst,
wobei die Inhaltsstoffe weiter mindestens eine Methylendonorverbindung umfassen, und
wobei das Polyisocyanat mindestens ein polymeres Polyisocyanat umfasst.

## Revendications

1. Composition comprenant au moins un polymère greffé d'halogénoalcadiène, au moins un composé aromatique multihydroxyle, et au moins un poly(isocyanate), dans laquelle ladite composition est capable de lier un substrat élastomère à au moins un autre substrat.

2. Composition selon la revendication 1, dans laquelle ledit polymère greffé d'halogénoalcadiène comprend au moins un produit de la réaction d'au moins un alcadiène conjugué cyclique halogéné avec au moins un poly(diène) insaturé qui comprend 50 % ou plus de motifs butadiène en poids sur la base du poids dudit poly(diène) insaturé.

3. Composition selon la revendication 1, dans laquelle ledit composé aromatique multihydroxyle comprend du résorcinol.

4. Composition selon la revendication 1, comprenant en outre au moins un composé donneur de méthylène.

5. Composition selon la revendication 4, dans laquelle ledit composé donneur de méthylène est l'hexaméthylènetétramine.

6. Composition selon la revendication 1, comprenant en outre au moins un agent de vulcanisation choisi dans le groupe consistant en le sélénium, le soufre, le tellure, les composés de ceux-ci, les alliages de ceux-ci et les mélanges de ceux-ci.

7. Composition selon la revendication 1, dans laquelle ledit poly(isocyanate) comprend au moins un poly(isocyanate) polymère.

8. Composition selon la revendication 1;
comprenant en outre au moins un composé donneur de méthylène;
comprenant en outre au moins un agent de vulcanisation choisi dans le groupe consistant en le sélénium, le soufre, le tellure, les composés de ceux-ci, les alliages de ceux-ci et les mélanges de ceux-ci;
dans laquelle ledit polymère greffé d'halogénoalcadiène comprend au moins un produit de la réaction d'au moins un alcadiène conjugué cyclique halogéné avec au moins un poly(diène) insaturé qui comprend 50 % ou plus de motifs butadiène en poids sur la base du poids dudit poly(diène) insaturé ;
dans laquelle ledit composé aromatique multihydroxyle comprend du résorcinol ;
et
dans laquelle ledit poly(isocyanate) comprend au moins un poly(isocyanate) polymère.

9. Article lié comprenant un substrat élastomère et au moins un autre substrat, liés ensemble à l'aide d'un adhésif formé par un procédé comprenant le mélange d'ingrédients comprenant au moins un poly(diène) greffé d'halogénoalcadiène, au moins un composé aromatique multihydroxyle et au moins un poly(isocyanate).

10. Article lié selon la revendication 9 ;
dans lequel ledit polymère greffé d'halogénoalcadiène comprend au moins un produit de la réaction d'au moins un alcadiène conjugué cyclique halogéné avec au moins un poly(diène) insaturé qui comprend 50 % ou plus de motifs butadiène en poids sur la base du poids dudit poly(diène) insaturé ;
dans lequel ledit composé aromatique multihydroxyle comprend du résorcinol ;
dans lequel lesdits ingrédients comprennent en outre au moins un composé donneur de méthylène ; et
dans lequel ledit poly(isocyanate) comprend au moins un poly(isocyanate) polymère.
